# EUROPEAN PATENT APPLICATION

(11) **EP 4 716 067 A1**
(43) Date of publication of application: **25.03.2026**
(21) Application number: 24839864.6
(22) Date of filing: 19.04.2024
(51) Int. Cl.: H02K 1/18, H02K 1/14, H02K 1/28, H02K 1/2793, H02K 21/24

(54) **PERMANENT MAGNET MOTOR, STATOR STRUCTURE OF PERMANENT MAGNET MOTOR, AND ROTOR STRUCTURE OF PERMANENT MAGNET MOTOR**

(30) Priority: 11.07.2023 KR 20230089686
(71) Applicant: Eflow Co., Ltd., Changwon-si, Gyeongsangnam-do 51542 (KR)
(72) Inventor: YOUN, Su Han, Haman-gun Gyeongsangnam-do 52043 (KR); CHOI, Seung Ho, Changwon-si Gyeongsangnam-do 51288 (KR); KIM, Min Ju, Changwon-si Gyeongsangnam-do 51367 (KR); KIM, Dong Hyun, Changwon-si Gyeongsangnam-do 51395 (KR); CHOI, Jeong Hoon, Changwon-si Gyeongsangnam-do 51723 (KR)
(74) Representative: Krauns, Christian
(86) International application number: PCT/KR2024/005268
(87) International publication number: WO 2025/014047

(57) **Abstract**

The present invention relates to a permanent magnet motor, a stator structure thereof, and a rotor structure thereof. In order to improve problems that may occur in an axial flux permanent magnet motor, the present invention provides a stator structure for preventing a stator core from being separated from a stator, a rotor structure for preventing a back yoke and permanent magnets from being separated from a rotor due to rotation of the rotor, and a permanent magnet motor including the stator structure and the rotor structure. The stator structure includes a plurality of stator cores around which a coil is wound, a stator fixing part coupled to one end of each of the plurality of stator cores, and a stator coupling part coupled to the stator fixing part through a fastening means, wherein a plurality of slits into which one end of each of the plurality of stator cores is inserted are formed radially with respect to a center of the stator fixing part.

## Description

### TECHNICAL FIELD

The present invention relates to a permanent magnet motor, a stator structure of the permanent magnet motor, and a rotor structure of the permanent magnet motor, and more particularly, to a stator structure for preventing a stator core from being separated from a stator, a rotor structure for preventing a back yoke and permanent magnets from being separated from a rotor due to rotation of the rotor, and a permanent magnet motor including the stator structure and the rotor structure, in order to improve problems that may occur in an axial flux permanent magnet motor.

### BACKGROUND ART

An axial flux permanent magnet motor is a motor in which a magnetic flux flows in an axial direction. Since an axial flux permanent magnet motor has a high power density and a diameter of the motor that is large relative to an axial length thereof, a relatively large number of poles can be designed, and thus it is known to be suitable for high-frequency or low-speed driving.

An axial flux permanent magnet motor includes a stator forming a magnetic field and a rotor configured to be rotatable relative to the stator.

The stator includes a plurality of stator cores arranged at regular intervals along a circumferential direction and having a predetermined height in an axial direction, and the stator cores are coupled to a stator fixing part in the axial direction.

The rotor includes permanent magnets arranged at regular intervals along the circumferential direction and rotates while forming a predetermined air gap with the stator cores.

The axial flux permanent magnet motor generates a rotational torque by generating a repulsive force or an attractive force between the stator cores and the permanent magnets of the rotor by switching a direction of current flowing through windings.

Meanwhile, in the process of generating the rotational torque described above, the axial flux permanent magnet motor has a problem in that the stator cores themselves are separated from the stator due to repetitive attractive forces. Therefore, it may be considered to improve structural aspects of each component constituting the stator in order to solve the problem of the stator cores being separated from the stator.

In addition, in the axial flux permanent magnet motor, the stator and the rotor are disposed to face each other through a gap in a direction parallel to a rotational axis. The stator includes a plurality of stator cores arranged in a circumferential direction of the motor and coils wound around the stator cores, and the rotor is rotated by sequentially energizing the coils.

In this case, the rotor includes a disk-shaped rotor plate formed of soft iron or the like, a back yoke forming a magnetic circuit, and a plurality of permanent magnets alternately arranged with N poles and S poles along a rotational direction of the rotor.

Meanwhile, in order to prevent the back yoke and the permanent magnets from being separated from the rotor plate during rotation of the rotor plate, each component of the axial flux permanent magnet motor is bonded through means such as bonding. However, when bonding is used for such bonding, a gap is generated between the permanent magnets, the back yoke, and the rotor plate, making complete bonding impossible. In addition, an increase in thickness due to bonding reduces an air gap, resulting in a problem of reduced motor efficiency.

Therefore, it may be considered to improve structural aspects of each component constituting the rotor in order to solve the problem of the back yoke and the permanent magnets being separated from the rotating rotor plate.

### SUMMARY OF THE INVENTION

### TECHNICAL PROBLEM

An object of the present invention for solving the above-described problems is to provide a stator structure of a permanent magnet motor that solves the problem of stator cores being separated from a stator through an improved stator structure.

An object of the present invention for solving the above-described problems is to provide a rotor structure of a permanent magnet motor that solves the problem of a back yoke and permanent magnets being separated from a rotor plate during rotation of the rotor plate through an improved rotor structure.

An object of the present invention for solving the above-described problems is to provide a permanent magnet motor including an improved stator structure and an improved rotor structure.

### TECHNICAL SOLUTION

In order to achieve the above-described objects, a stator structure of a permanent magnet motor according to an embodiment of the present invention includes a plurality of stator cores around which a coil is wound, a stator fixing part coupled to one end of each of the plurality of stator cores, and a stator coupling part coupled to the stator fixing part through a fastening means, wherein a plurality of slits into which one end of each of the plurality of stator cores is inserted are formed radially with respect to a center of the stator fixing part.

The stator core includes a core foot part positioned on one surface of a permanent magnet included in a rotor, a core body part formed at one end of the core foot part and around which the coil is wound, and a core head part formed at one end of the core body part and inserted into the slit, wherein the stator fixing part is in contact with one surface of the core body part when the stator core is inserted into the slit, and a V-cut is formed at one end portion of the core head part to facilitate heat dissipation of the stator core.

The stator fixing part includes a first stator fixing part having a plurality of slits formed radially with respect to a center thereof, the plurality of slits having a width corresponding to a width of the core head part, and a second stator fixing part having a plurality of slits formed radially with respect to a center thereof, the plurality of slits having a width greater than the width of the core head part.

The other surface of the second stator fixing part is in contact with one surface of the core body part, and the other surface of the first stator fixing part is in contact with one surface of the second stator fixing part, the first stator fixing part and the second stator fixing part are coupled to the stator coupling part through the fastening means, and the second stator fixing part protects the first stator fixing part.

In order to achieve the above-described objects, a rotor structure of a permanent magnet motor according to an embodiment of the present invention includes a rotor plate installed to be rotatable within a housing, a back yoke installed on one surface of the rotor plate and forming a magnetic circuit, and a plurality of permanent magnets installed circumferentially on one surface of the back yoke, wherein a protrusion part protruding in one direction is formed on one surface of the rotor plate, the back yoke is positioned on an inner side of the protrusion part, and the protrusion part prevents the back yoke from being separated toward an outer side of the rotor plate during rotation of the rotor plate.

The protrusion part includes a protruding portion formed to protrude a predetermined length toward a center of the rotor plate, and a groove part recessed a predetermined length is formed on an outer circumferential surface of the back yoke at a position corresponding to the protruding portion, thereby preventing separation of the back yoke in a rotational direction of the rotor plate during rotation of the rotor plate.

Each of the plurality of permanent magnets is installed between the protruding portions respectively formed on a pair of the protrusion parts.

The protrusion part has a height corresponding to a thickness of the back yoke and a thickness of the permanent magnet, thereby preventing the back yoke and the permanent magnet from being separated toward an outer side of the rotor plate and in a rotational direction of the rotor plate during rotation of the rotor plate.

In order to achieve the above-described objects, a permanent magnet motor according to an embodiment of the present invention includes a housing, a stator installed within the housing and including a plurality of stator cores around which a coil is wound, a rotor installed to be rotatable within the housing and including a permanent magnet, the rotor being rotated by a rotating magnetic field formed when power is applied to the coil, and a shaft installed at a center of the rotor and rotating together with the rotor when the rotor rotates, wherein the stator includes the plurality of stator cores, a stator fixing part coupled to one end of each of the plurality of stator cores, and a stator coupling part coupled to the stator fixing part through a fastening means, and a plurality of slits into which one end of each of the plurality of stator cores is inserted are formed radially with respect to a center of the stator fixing part.

The housing includes an upper housing having a shaft protruding from a center thereof, a first side housing fixedly coupled to the stator coupling part on an inner side thereof, a second side housing having the stator cores positioned on an inner side thereof, and a lower housing having the rotor formed on an upper portion thereof to be rotatable, and the upper housing, the first side housing, the second side housing, and the lower housing are integrally coupled through a plurality of fastening means.

### ADVANTAGEOUS EFFECTS

According to the stator structure of the permanent magnet motor of the present invention, a plurality of slits into which one end of the stator cores can be inserted in an axial direction are formed in the stator fixing part, thereby providing an effect of preventing the stator cores from being separated from the stator.

According to the stator structure of the permanent magnet motor of the present invention, a V-cut is formed at one end of the stator core, thereby providing an effect of dissipating heat generated by the stator core.

According to the stator structure of the permanent magnet motor of the present invention, a plurality of stator fixing parts each having slits of different sizes are included, thereby providing an effect of protecting the stator fixing part into which the stator cores are inserted.

According to the rotor structure of the permanent magnet motor of the present invention, a protrusion part protruding upward is formed on the rotor plate, and the back yoke and the permanent magnets are installed on an inner side of the protrusion part, thereby providing an effect of preventing separation of the back yoke and the permanent magnets during rotation of the rotor plate.

According to the rotor structure of the permanent magnet motor of the present invention, a protruding portion formed to protrude a predetermined length toward a center of the rotor plate is formed on an inner side of the protrusion part, and a groove part corresponding to the protruding portion is formed to be recessed on an outer circumferential surface of the back yoke, thereby providing an effect of preventing separation of the back yoke during rotation of the rotor plate.

According to the rotor structure of the permanent magnet motor of the present invention, the permanent magnets are installed between the protruding portions respectively formed on a pair of protrusion parts, thereby providing an effect of preventing separation of the permanent magnets during rotation of the rotor plate.

The permanent magnet motor of the present invention includes the above-described stator structure and rotor structure, thereby providing an effect of preventing separation of the stator cores, the back yoke, and the permanent magnets during operation.

### BRIEF DESCRIPTION OF DRAWINGS

FIG. 1 is a perspective view showing a permanent magnet motor according to the present invention.
FIG. 2 is an exploded perspective view showing a housing according to the present invention.
FIG. 3 is a perspective view showing an interior of the housing according to the present invention.
FIG. 4 is an exploded perspective view showing a stator, a rotor, and a shaft positioned inside the housing according to the present invention.
FIG. 5 is an exploded perspective view showing each component of the stator according to the present invention.
FIG. 6 is a view showing a state in which one end of a stator core according to the present invention is being inserted into a slit formed in a stator fixing part.
FIG. 7 is a view showing a state in which one end of the stator core according to the present invention is inserted into the slit.
FIG. 8 is a cross-sectional view showing a state in which one end of the stator core is inserted into the slit of the stator fixing part.
FIG. 9 is a cross-sectional view showing another embodiment of the stator core according to the present invention.
FIG. 10 is an exploded perspective view showing another embodiment of the stator fixing part according to the present invention.
FIG. 11 is an exploded perspective view showing each component of the rotor according to the present invention.
FIG. 12 is a perspective view showing the rotor according to the present invention.
FIG. 13 is a cross-sectional view showing a portion of the rotor according to the present invention.

### DETAILED DESCRIPTION

Hereinafter, some embodiments of the present invention will be described in detail with reference to exemplary drawings. In adding reference numerals to components of each drawing, it should be noted that the same components are assigned the same reference numerals as much as possible even though they are shown in different drawings.

In describing the embodiments of the present invention, when it is determined that a detailed description of related known configurations or functions may obscure understanding of the embodiments of the present invention, the detailed description thereof will be omitted.

In addition, in describing components of the embodiments of the present invention, terms such as first, second, A, B, (a), and (b) may be used. These terms are only for distinguishing one component from another component, and the nature, order, or sequence of the corresponding component is not limited by the term.

In this specification, a singular form includes a plural form unless otherwise specified in the context. The terms "comprises" and/or "comprising" used in the specification do not exclude the presence or addition of one or more other components in addition to the mentioned components.

In this specification, one end, one surface, and one direction mean an upper end, an upper surface, and an upward direction, respectively, as shown in the drawings, and the other end, the other surface, and the other direction mean the opposite thereof, respectively. In addition, when illustrating the drawings, a direction in which a shaft protrudes to an outside of a housing is illustrated as an upward direction.

Hereinafter, the present invention will be described in more detail with reference to the accompanying drawings.

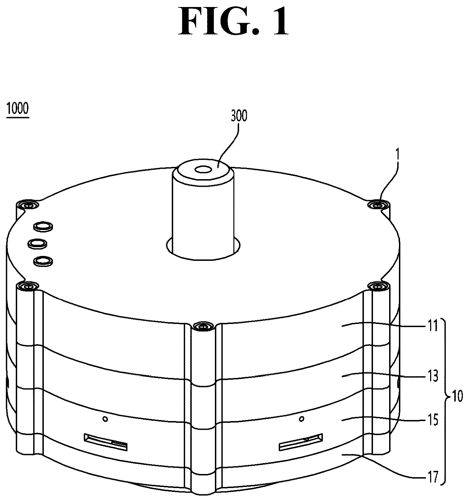

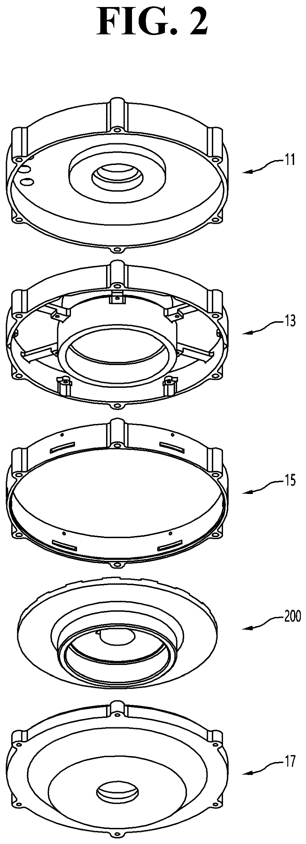

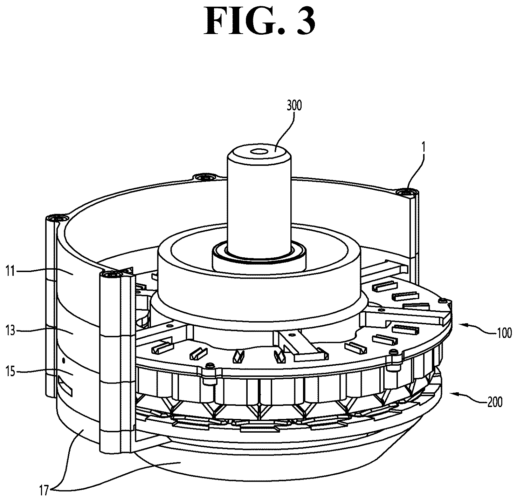

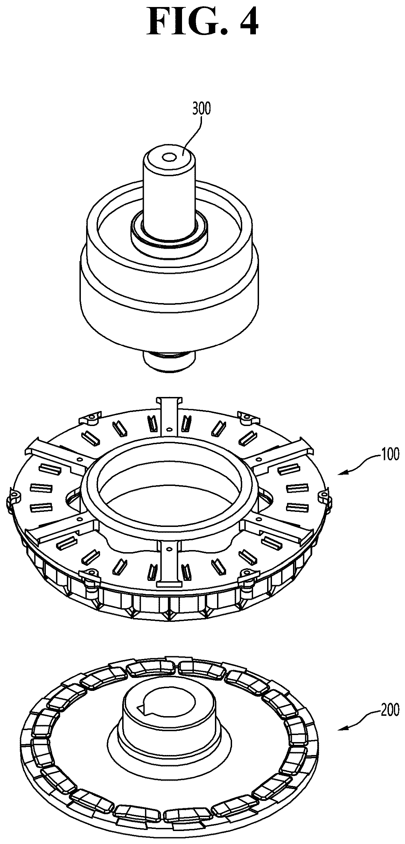

FIG. 1 is a perspective view showing a permanent magnet motor 1000 according to the present invention, and FIG. 2 is an exploded perspective view showing a housing 10 according to the present invention. FIG. 3 is a perspective view showing an interior of the housing 10 according to the present invention, and FIG. 4 is an exploded perspective view showing a stator 100, a rotor 200, and a shaft 300 positioned inside the housing 10 according to the present invention.

Referring to FIGS. 1 to 4, the permanent magnet motor 1000 according to the present invention includes the housing 10, the stator 100, the rotor 200, and the shaft 300.

The housing 10 forms an internal space in which the stator 100, the rotor 200, and the shaft 300 are installed.

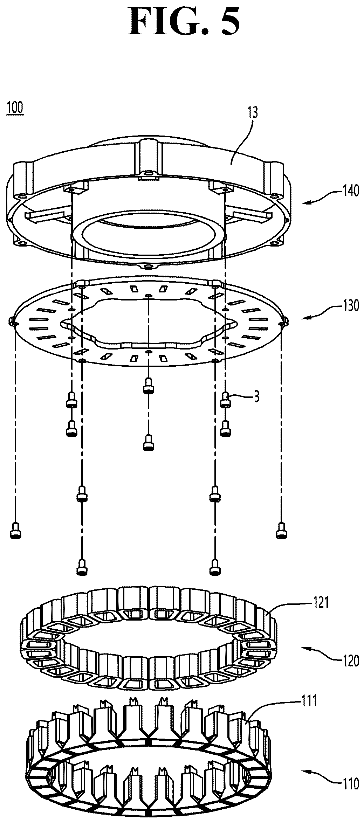

The stator 100 is installed within the housing, and a plurality of coils 120 are wound thereon. In detail, the stator 100 includes a plurality of stator cores 110 around which a coil 121 is wound, and will be described later with reference to FIGS. 5 to 10.

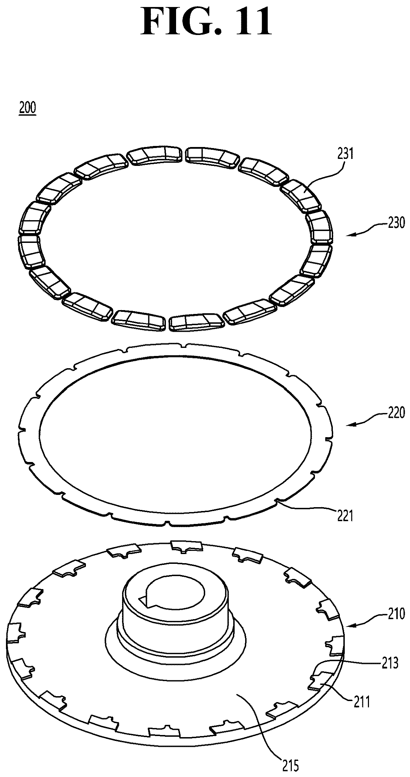

The rotor 200 is installed to be rotatable within the housing 10 and includes a plurality of permanent magnets 230. The rotor 200 is rotated by a rotating magnetic field formed when power is applied to the coil 121, and will be described later with reference to FIGS. 11 to 13.

The shaft 300 is installed at a center of the rotor 200 and rotates together with the rotor 200 when the rotor 200 rotates. A portion of the shaft 300 protrudes to one end of the housing 10 (an upper end of the housing 10 as shown in FIG. 1).

A separate hole opened for power supply and/or transmission and reception of control signals may be further formed on one side surface of the housing 10. In addition, a separate hole for discharging heat generated by operation of the motor 1000 may be further formed on one side surface of the housing 10.

The housing 10 according to the present invention includes an upper housing 11, a first side housing 13, a second side housing 15, and a lower housing 17. The upper housing 11, the first side housing 13, the second side housing 15, and the lower housing 17 are integrally coupled to each other through a plurality of fastening means 1 to form the housing 10. In this case, the fastening means 1 may be, for example, a screw coupling structure including a screw 1 and a screw hole, but is not limited thereto.

A shaft hole through which the shaft 300 protrudes to an outside is formed at a center of the upper housing 11.

The first side housing 13 is fixedly coupled to a stator coupling part 140 to be described later on an inner side thereof. The stator coupling part 140 and a stator fixing part 130 to be described later are positioned on the inner side of the first side housing 13, and the first side housing 13 protects the stator coupling part 140 and the stator fixing part 130.

The second side housing 15 has a plurality of stator cores 110 to be described later positioned on an inner side thereof to protect the coil 121 and the stator core 111.

The rotor 200 to be described later is installed on an upper portion of the lower housing 17 to be rotatable, and the lower housing 17 protects the rotor 200.

The permanent magnet motor 1000 according to the present invention includes the stator 100, the rotor 200, and the shaft 300. Referring to FIGS. 3 and 4, as shown in the drawings, the stator 100 is installed on an upper portion of the rotor 200, the shaft 300 is installed at a center of the rotor 200, and a through hole through which the shaft 300 passes is formed at a center of the stator 100.

Hereinafter, a structure of the stator 100 of the permanent magnet motor 1000 according to the present invention will be described with reference to FIGS. 5 to 10.

FIG. 5 is an exploded perspective view showing each component of the stator 100 according to the present invention.

Referring to FIG. 5, the stator 100 according to the present invention includes a plurality of stator cores 110 around each of which the coil 121 is wound, the stator fixing part 130 coupled to the stator core 111, and the stator coupling part 140 coupled to the stator fixing part 130.

As described above, the stator coupling part 140 is fixedly coupled to the inner side of the first side housing 13.

The stator fixing part 130 is positioned at a lower portion of the stator coupling part 140 as shown in FIG. 5 and is fixedly coupled to the stator coupling part 140 through a plurality of fastening means 3. In this case, the fastening means 3 may be, for example, a screw coupling structure including a screw 3 and a screw hole 133, but is not limited thereto. When the fastening means 3 is a screw coupling structure, a plurality of screw holes 133 for inserting the screw 3 are formed at positions corresponding to each other in the stator fixing part 130 and the stator coupling part 140. According to an embodiment, the stator fixing part 130 may be implemented with an electrically conductive material, and the stator core 111 including the V-cut 113 is fixed to the stator fixing part 130 implemented with the electrically conductive material, thereby increasing motor efficiency.

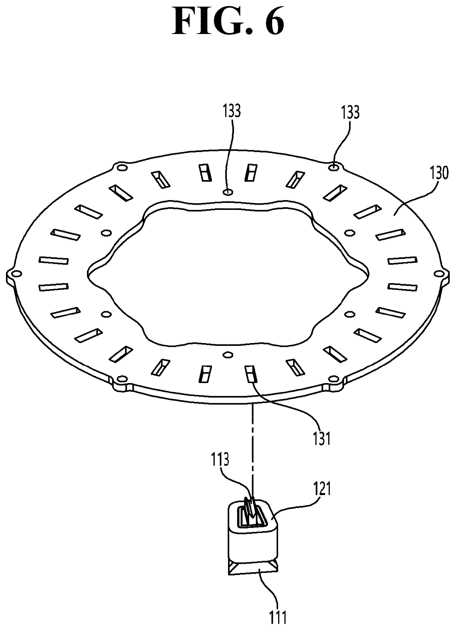

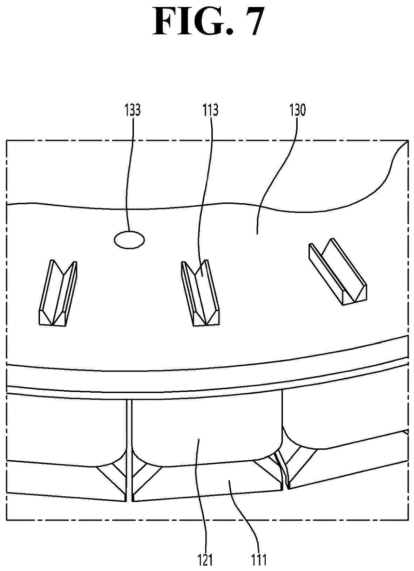

FIG. 6 is a view showing a state in which one end of the stator core 111 according to the present invention is being inserted into a slit 131 formed in the stator fixing part 130, and FIG. 7 is a view showing a state in which one end of the stator core 111 according to the present invention is inserted into the slit 131.

Referring to FIG. 6, the stator fixing part 130 is coupled to one end of the stator core 111. To this end, a plurality of slits 131 into which one end of each of the plurality of stator cores 110 is inserted are formed in the stator fixing part 130.

The plurality of slits 131 formed in the stator fixing part 130 are formed radially with respect to a center of the stator fixing part 130. A plurality of stator cores 111 are arranged in a circumferential direction of the stator fixing part 130 and are respectively inserted into the slits 131 of the stator fixing part 130. The stator fixing part 130 may have, as an embodiment, a shape of a flat disk. A central portion of the stator fixing part 130 excluding a portion where the slits 131 are formed and one end of the stator core 111 is inserted is formed as an empty space to reduce a weight of the stator 100.

Referring to FIG. 7, the plurality of slits 131 formed in the stator fixing part 130 have a shape corresponding to a shape of one end of the stator core 111 so as to prevent movement in left and right directions when one end of the stator core 111 is inserted into each slit 131.

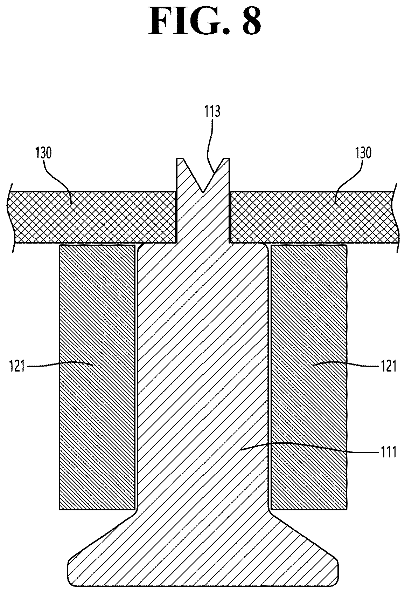

FIG. 8 is a cross-sectional view showing a state in which one end of the stator core 111 is inserted into the slit 131 of the stator fixing part 130.

Referring to FIG. 8, the stator core 111 includes a core body part 1115, a core head part 1113 formed to extend upward from the core body part 1115, and a core foot part 1111 formed to extend downward from the core body part 1115.

The coil 121 is wound around the core body part 1115, and the wound coil 121 is positioned in a space between an adjacent other core body part 1115.

The core head part 1113 inserted into the slit 131 is formed at one end of the core body part 1115.

A width of the core head part 1113 in a horizontal direction as shown in FIG. 8 is formed to be narrower than a width of the core body part 1115. Therefore, when the core head part 1113 is inserted into the slit 131, the stator fixing part 130 is in contact with one surface of the core body part 1115. Therefore, when the plurality of stator cores 110 are respectively inserted into the slits 131, the stator fixing part 130 is placed on an upper portion of the core body part 1115 of the plurality of stator cores 110.

The core foot part 1111 is placed on one surface of the permanent magnets 230 so as to form a predetermined air gap with the permanent magnet 231 of the rotor 200.

As described above, the stator fixing part 130 is coupled to the stator coupling part 140 through the fastening means 3, the stator coupling part 140 is fixedly coupled to the first side housing 13, and the first side housing 13 is coupled to the upper housing 11, the second side housing 15, and the lower housing 17 through the fastening means 1. In addition, the core foot part 1111 is placed on one surface of the permanent magnets 230. The slit 131 into which the core head part 1113 is inserted has a shape corresponding to a shape of the core head part 1113 formed at one end of the stator core 111 so as to prevent the inserted core head part 1113 from moving in left and right directions.

Therefore, when the core head part 1113 is inserted into the slit 131, the stator core 111 does not move in any direction of up, down, left, and right. Consequently, the structure of the stator 100 according to the present invention solves the problem of the stator core 111 being separated from the stator 100 by inserting the core head part 1113 into the slit 131. In addition, when it is desired to remove the stator core 111 from the stator 100 for reasons such as replacement of the coil 121 and/or the stator core 111, by releasing the coupling of the housing 10 through the fastening means 1 of the housing 10 and separating the lower housing 17 and the rotor 200 installed on the lower housing 17 from the motor 1000, an effect of easily removing a specific stator core 111 from the stator 100 is achieved.

Meanwhile, a V-cut 113 (V-cutting) having a cross-section recessed in a 'V' shape is formed at one end portion of the core head part 1113. The V-cut 113 increases a cross-sectional area of the stator core 111, and consequently, an area where the stator core 111 contacts air increases. Therefore, it becomes easier to release heat generated by the stator core 111 to an outside.

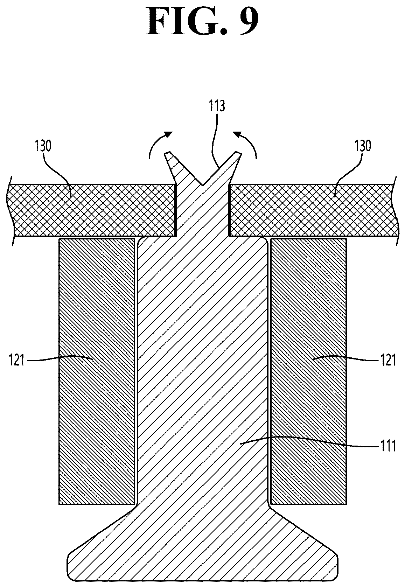

FIG. 9 is a cross-sectional view showing another embodiment of the stator core 111 according to the present invention.

In addition, referring to FIG. 9, a width of both ends of the V-cut 113 formed at one end portion of the core head part 1113 is formed to extend to be wider than a width of the core head part 1113, and both ends of the V-cut 113 are made of an elastic material so that each of both ends can be moved toward a center by an external force. Therefore, after applying an external force to both ends of the V-cut 113 so that both ends move toward the center, the core head part 1113 can be inserted into the slit 131 or removed from the slit 131. When both ends of the V-cut 113 are formed to extend to be wider than the width of the core head part 1113 as such, the V-cut 113 can further prevent the stator core 111 from being separated toward the permanent magnet 231 after the core head part 1113 is inserted into the slit 131.

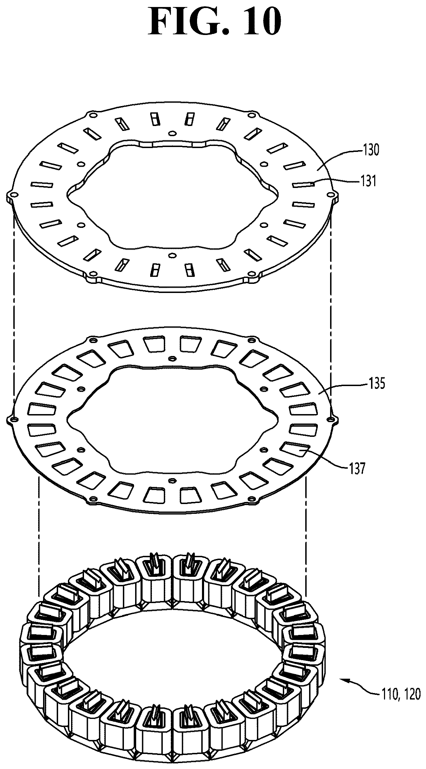

FIG. 10 is an exploded perspective view showing another embodiment of the stator fixing part 130 according to the present invention.

According to another embodiment of the stator fixing part 130 according to the present invention, the stator fixing part 130 may include a first stator fixing part 130 having a plurality of slits 131 formed therein with a shape corresponding to a shape of the core head part 1113, and a second stator fixing part 135 having a plurality of slits 137 formed therein with a shape larger than that of the slits 131 formed in the first stator fixing part 130.

That is, if the above-described stator fixing part 130 is referred to as the first stator fixing part 130, the second stator fixing part 135 differs from the first stator fixing part 130 only in a shape of the slits 131 and 137 thereof. A width of the slits 131 formed in the first stator fixing part 130 has a width corresponding to a width of the core head part 1113, so that when the core head part 1113 is inserted into the slits 131 formed in the first stator fixing part 130, movement of the core head part 1113 and the stator core 111 in left and right directions is prevented by the slits 131 of the first stator fixing part 130.

On the other hand, a width of the slits 137 formed in the second stator fixing part 135 has a width wider than a width of the slits 131 formed in the first stator fixing part 130 and a width of the core head part 1113.

The second stator fixing part 135 may be positioned between the first stator fixing part 130 and the stator cores 110. Therefore, the other surface (a lower surface as shown in FIG. 10) of the second stator fixing part 135 is placed on one surface of the core body part 1115, and in a state in which one surface (an upper surface as shown in FIG. 10) of the second stator fixing part 135 is in contact with the other surface of the first stator fixing part 130, the first stator fixing part 130 and the second stator fixing part 135 are coupled to the stator coupling part 140 through the fastening means 3. When the fastening means is a screw in this case, the second stator fixing part 135 protects the first stator fixing part 130 from an external force generated by screw coupling. Since the slits 131 of the first stator fixing part 130 are for preventing separation of the stator core 111, it can be said that it is important to prevent damage to the first stator fixing part 130. According to an embodiment, the first stator fixing part 130 and the second stator fixing part 135 may be implemented with an electrically conductive material, and the stator core 111 including the V-cut 113 is fixed to the stator fixing parts 130 and 135 implemented with the electrically conductive material, thereby increasing motor efficiency.

In addition, although not shown in the drawings, a third stator fixing part (not shown) having a shape larger than that of the slits 131 of the first stator fixing part 130 and having a plurality of slits formed at positions corresponding to the slits 131 of the first stator fixing part 130 may be further included between the first stator fixing part 130 and the stator coupling part 140. The third stator fixing part can protect the first stator fixing part 130 from an external force generated when the first stator fixing part 130 and the stator coupling part 140 are coupled through the fastening means 3.

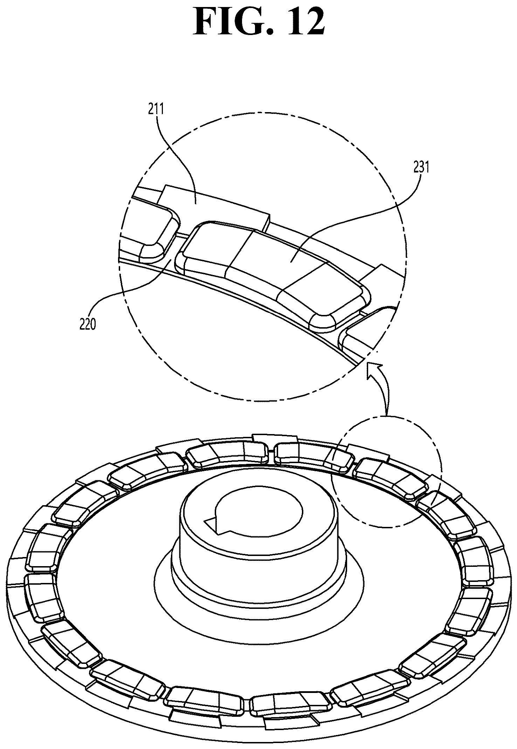

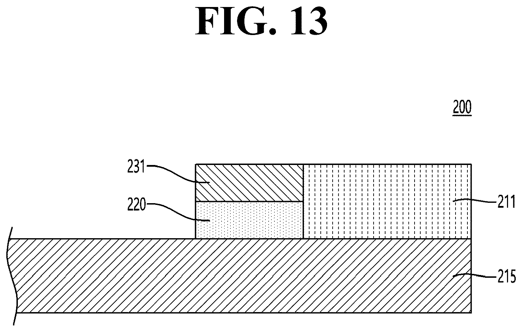

FIG. 11 is an exploded perspective view showing each component of the rotor 200 according to the present invention, FIG. 12 is a perspective view showing the rotor 200 according to the present invention, and FIG. 13 is a cross-sectional view showing a portion of the rotor 200 according to the present invention.

Referring to FIG. 11, the rotor 200 according to the present invention includes a rotor plate 210, a back yoke 220, and permanent magnets 230.

The rotor plate 210 is installed to be rotatable within the housing 10, and in detail, is installed on an upper portion of the lower housing 17. A space coupled to the shaft 300 is formed at a center of the rotor plate 210.

The rotor 200 includes the back yoke 220 forming a magnetic circuit. Due to an interaction between a magnetic flux generated by the stator 100 and a magnetic flux generated by the rotor 200, a torque is generated in the motor 1000. The magnetic flux of the stator 100 is generated by a current flowing through the coil 121, and the magnetic flux of the rotor 200 is generated by the permanent magnets 230 alternately arranged with N poles and S poles. In order for the magnetic flux generated by the rotor 200 to generate a torque, a magnetic flux path flowing from an N pole to an S pole or from an S pole to an N pole is required, and the back yoke is further included to generate such a path, that is, to form a magnetic circuit. Meanwhile, when power is applied to the coil 121, the rotor plate 210 is rotated by a rotating magnetic field generated by a change in polarity of the permanent magnets 230 and polarity of the stator core 111. The shaft 300 rotates together with the rotor plate 210.

The back yoke 220 is installed on one surface of the rotor plate 210. The plurality of permanent magnets 230 are installed circumferentially of the back yoke 220 on one surface of the back yoke 220. The back yoke 220 may have a ring shape forming a surface on which the permanent magnets 230 are installed. As the back yoke 220 has the ring shape, a weight of the back yoke 220 can be relatively reduced, thereby improving motor performance.

Meanwhile, a protrusion part 211 protruding in one direction, that is, in an upward direction as shown in the drawings, is formed on one surface of the rotor plate 210 along an outer periphery thereof. The back yoke 220 is installed on an inner side of the protrusion part 211. The protrusion part 211 prevents the back yoke 220 from being separated in an outward direction from a center of the rotor plate 210 during rotation of the rotor plate 210.

The protrusion part 211 may have a ring shape, but is not limited thereto, and for example, as shown in FIGS. 11 and 12, may have a shape segmented into a plurality from the ring shape. When a plurality of protrusion parts 211 are formed on the rotor plate 210, each protrusion part 211 is formed to be spaced apart from an adjacent protrusion part 211 by a predetermined distance. As a space is formed between adjacent protrusion parts 211 by the plurality of protrusion parts 211, a weight of the rotor plate 210 is reduced to improve motor performance, and heat generated by the back yoke 220 and the permanent magnet 231 can be released through the spaced space, thereby also achieving an effect of facilitating heat dissipation.

Meanwhile, the protrusion part 211 includes a protruding portion 213 formed to protrude a predetermined length toward a center of the rotor plate 210. A groove part 221 recessed a predetermined length is formed on an outer circumferential surface of the back yoke 220 at a position corresponding to the protruding portion 213. The protruding portion 213 and the groove part 221 have shapes corresponding to each other so as to be fit-coupled to each other. As the protruding portion 213 and the groove part 221 are fit-coupled, the back yoke 220 can be prevented from being separated in a rotational direction of the rotor plate 210 during rotation of the rotor plate 210.

In summary, the back yoke 220 is installed on the inner side of the protrusion part 211, so that separation toward an outer side of the rotor plate 210 is prevented by the protrusion part 211, and the back yoke 220 and the protrusion part 211 are fit-coupled through the groove part 221 and the protruding portion 213, so that the back yoke 220 is prevented from being separated in the rotational direction of the rotor plate 210.

As shown in FIG. 12, each permanent magnet 231 constituting the plurality of permanent magnets 230 installed on one surface of the back yoke 220 is installed between the protruding portions 213 respectively formed on a pair of adjacent protrusion parts 211. Therefore, the permanent magnet 231 is also prevented from being separated toward an outer side of the rotor plate 210 by the protrusion part 211 during rotation of the rotor plate 210, and is also prevented from being separated in the rotational direction of the rotor plate 210 by the protruding portion 213.

As an embodiment, it is preferable that an upwardly protruding height of the protrusion part 211, as shown in FIG. 13, is equal to or has a height corresponding to a sum of thicknesses (heights) of the back yoke 220 and the permanent magnet 231.

In this specification, the term "part" includes a unit realized by hardware, a unit realized by software, and a unit realized by using both. In addition, one unit may be realized by using two or more pieces of hardware, and two or more units may be realized by one piece of hardware.

The scope of protection of the present invention is not limited to the description and expression of the embodiments explicitly described above. In addition, it is reiterated that the scope of protection of the present invention cannot be limited by obvious changes or substitutions in the technical field to which the present invention pertains.

## Claims

1. A stator structure of a permanent magnet motor, comprising:
a plurality of stator cores around which a coil is wound;
a stator fixing part coupled to one end of each of the plurality of stator cores; and
a stator coupling part coupled to the stator fixing part through a fastening means,
wherein the stator fixing part has a plurality of slits formed radially with respect to a center thereof, each of the plurality of slits receiving one end of a respective one of the plurality of stator cores inserted therein.

2. The stator structure of the permanent magnet motor according to claim 1, wherein:
the stator core comprises:
a core foot part positioned on one surface of a permanent magnet included in a rotor;
a core body part formed at one end of the core foot part and around which the coil is wound; and
a core head part formed at one end of the core body part and inserted into the slit,
wherein the stator fixing part is in contact with one surface of the core body part when the stator core is inserted into the slit, and
wherein a V-cut is formed at one end portion of the core head part to facilitate heat dissipation of the stator core.

3. The stator structure of the permanent magnet motor according to claim 2, wherein:
the stator fixing part comprises:
a first stator fixing part having a plurality of slits formed radially with respect to a center thereof, each of the plurality of slits having a width corresponding to a width of the core head part; and
a second stator fixing part having a plurality of slits formed radially with respect to a center thereof, each of the plurality of slits having a width greater than the width of the core head part.

4. The stator structure of the permanent magnet motor according to claim 3, wherein:
the other surface of the second stator fixing part is in contact with one surface of the core body part, and the other surface of the first stator fixing part is in contact with one surface of the second stator fixing part,
the first stator fixing part and the second stator fixing part are coupled to the stator coupling part through the fastening means, and
the second stator fixing part protects the first stator fixing part.

5. A rotor structure of a permanent magnet motor, comprising:
a rotor plate installed to be rotatable within a housing;
a back yoke installed on one surface of the rotor plate and forming a magnetic circuit;
and
a plurality of permanent magnets installed circumferentially on one surface of the back yoke,
wherein a protrusion part protruding in one direction is formed on one surface of the rotor plate,
wherein the back yoke is positioned on an inner side of the protrusion part, and
wherein the protrusion part prevents the back yoke from being separated toward an outer side of the rotor plate during rotation of the rotor plate.

6. The rotor structure of the permanent magnet motor according to claim 5, wherein:
the protrusion part includes a protruding portion formed to protrude a predetermined length toward a center of the rotor plate, and
a groove part recessed a predetermined length is formed on an outer circumferential surface of the back yoke at a position corresponding to the protruding portion,
wherein the groove part prevents separation of the back yoke in a rotational direction of the rotor plate during rotation of the rotor plate.

7. The rotor structure of the permanent magnet motor according to claim 6, wherein:
each of the plurality of permanent magnets is installed between the protruding portions respectively formed on a pair of the protrusion parts.

8. The rotor structure of the permanent magnet motor according to claim 7, wherein:
the protrusion part has a height corresponding to a thickness of the back yoke and a thickness of the permanent magnet,
wherein the protrusion part prevents the back yoke and the permanent magnet from being separated toward an outer side of the rotor plate and in a rotational direction of the rotor plate during rotation of the rotor plate.

9. A permanent magnet motor, comprising:
a housing;
a stator installed within the housing and including a plurality of stator cores around which a coil is wound;
a rotor installed to be rotatable within the housing and including a permanent magnet, the rotor being rotated by a rotating magnetic field formed when power is applied to the coil; and
a shaft installed at a center of the rotor and rotating together with the rotor when the rotor rotates,
wherein the stator comprises:
the plurality of stator cores;
a stator fixing part coupled to one end of each of the plurality of stator cores; and
a stator coupling part coupled to the stator fixing part through a fastening means,
wherein the stator fixing part has a plurality of slits formed radially with respect to a center thereof, each of the plurality of slits receiving one end of a respective one of the plurality of stator cores inserted therein.

10. A permanent magnet motor, comprising:
a housing;
a stator installed within the housing and including a plurality of stator cores around which a coil is wound;
a rotor installed to be rotatable within the housing and including a permanent magnet, the rotor being rotated by a rotating magnetic field formed when power is applied to the coil; and
a shaft installed at a center of the rotor and rotating together with the rotor when the rotor rotates,
wherein the stator comprises:
the plurality of stator cores;
a stator fixing part coupled to one end of each of the plurality of stator cores; and
a stator coupling part coupled to the stator fixing part through a fastening means,
wherein the stator fixing part has a plurality of slits formed radially with respect to a center thereof, each of the plurality of slits receiving one end of a respective one of the plurality of stator cores inserted therein.
